## Europäisches Patentamt

## European Patent Office

## Office européen des brevets

(11) Publication number: **0 175 655**
**B1**

(12) **EUROPEAN PATENT SPECIFICATION**

(45) Date of publication of patent specification: **14.06.89**

(21) Application number: **85830216.9**

(22) Date of filing: **12.08.85**

(51) Int. Cl.⁴: **B 60 R 19/18,** B 60 K 11/08

(54) Bumper with air troughflow for cooling the radiator and the front brakes.

(30) Priority: **12.09.84 IT 5380784 u**

(43) Date of publication of application:
**26.03.86 Bulletin 86/13**

(45) Publication of the grant of the patent:
**14.06.89 Bulletin 89/24**

(84) Designated Contracting States:
**DE FR GB SE**

(56) References cited:
**FR-A-2 233 199**
**FR-A-2 258 288**
**FR-A-2 396 684**

**PATENTS ABSTRACTS OF JAPAN, vol. 7., no.
211 (M-243)1356r, 17th September 1983; & JP -
A - 58 105 850 (NISSAN JIDOSHA K.K.)
23-06-1983**

(73) Proprietor: **FIAT AUTO S.p.A.
Corso Giovanni Agnelli 200
I-10135 Torino (IT)**

(72) Inventor: **Di Giusto, Nevio
Via Guarini 48
I-10078-Venaria(Turin) (IT)**

Courier Press, Leamington Spa, England.

## Description

It is known a bumper of the above mentioned type (see e.g. French Patent No. 2258288) comprising two slots fitted to admit the air and to direct it outwards through a series of orifices opening in the wheel boxes.

This solution contributes to reduce the motor vehicle drage and the fuel consumption, but does not permit to make use in the best way of the air introduced, e.g. for the cooling of other parts, such as radiators, brakes, etc.

The present invention has the purpose to realize a bumper of the above mentioned type which, besides reducing the drag (Cx) because of the channelling of the cooling flow, improves also the air distribution on the radiator and supplies a forced ventilation on the brake disks.

The purpose of the present invention is attained by a bumper of the above mentioned type, characterized in that the air admitted by the intake flows into a first duct in which it forms an air flow directed partially on the radiator through a second duct and partially on the front brake shoes through a third duct, then into the nozzle which provides to divert the air on the front brakes. By this solution the radiator position is not dependent on the position of the air intake and this facilitates the motor vehicle design.

The throughflow allows also to reduce the radiator dimensions, avoiding the usual losses of pressure of a usual cooling system.

This involves also a reduction in the weight and in the costs of the radiator and moreover reduces the costs of the electric fan (less diameter, less power).

Furthermore, by directing the air on the front brake shoes by nozzles placed at the ends of the bumper, it is minimized the drag of possible specific intakes and the wear of the shoes, due to their excessive heating.

Further characteristics and advantages of the present invention will be now described, purely by way of non-limiting example, with reference to the accompanying drawings, in which:

Fig. 1 is a perspective view of the device according to the present invention;

Fig. 2 is a vertical view of the device of Fig. 1.

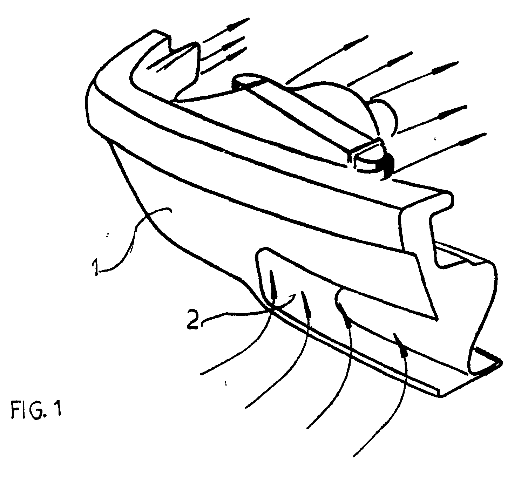

With reference to Fig. 1, numeral 1 shows a front bumper, for a not-illustrated motor vehicle, made by flow forming method, fitted to admit the air through an intake 2 obtained in the front section of the bumper 1.

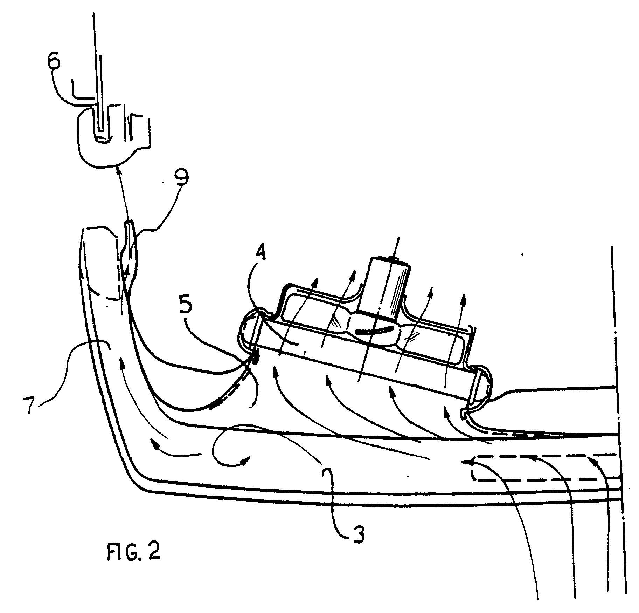

With reference to Fig. 2, the air admitted by the intake 2 (see Fig. 1) flows into a first duct 3 in which it forms an air flow directed partially on the radiator 4 through a second duct 5 and partially on the front brake shoes 6 through a third duct 7, then into the nozzle 9 which provides to divert the air on the front brakes 6.

Considering that the radiator is pre-assembled on the bumper 1, during the assembly the operator will insert it into the proper slots arranged on the car body, not illustrated, and will position it, before definitively fixing it, in such a way that the nozzle 9 lies before the front brake shoes 6; after this operation he will proceed to the final fixing of the bumper 1.

Naturally, without prejudice to the principle of the invention, the details of construction and forms of embodiment may vary extensively from what has been described and illustrated purely by way of example, without thereby moving beyond the scope of the claims.

## Claims

1. A front bumper for a motor vehicle having a radiator (4) mounted in the front bonnet, the said bumper (1) having on intake (2) for the intake of air for the ventilation of said radiator (4), whereby when the motor vehicle is in motion the said radiator (4) is cooled by the air flowing exclusively through said intake (2) of the bumper, characterised in that the air admitted by the intake (2) flows into a first duct (3) in which it forms an air flow directed partially on the radiator (4) through a second duct (5) and partially on the fornt brake shoes (6) through a third duct (7), then into the nozzle (9) which provides to divert the air on the front brakes (6).

2. The bumper according to Claim 1, characterized in that it is made of a blow formed plastic material.

## Patentansprüche

1. Vordere Stoßstange für ein Kraftfahrzeug mit einem unter der vorderen Motorhaube angebrachten Kühlgebläse, wobei die Stoßstange (1) einen Luft-Einlaß (2) für die Belüftung des Kühlgebläses (4) aufweist derart, daß während der Fahrt des Kraftfahrzeugs das Kühlgebläse (4) mittels der nur durch den Einlaß (2) der Stroßstange strömenden Luft gekühlt wird, dadurch gekennzeichnet, daß die durch den Einlaß (2) zugeführte Luft in einen ersten Kanal (3) strömt, in dem ein Luftstrom gebildet wird, der teilweise über einen zweiten Kanal (5) zu dem Kühlgebläse (4) und teilweise über einen dritten Kanal (7) und anschließend über eine die Luft gegen die Vorderbremsen (6) lenkende Düse (9) zu dem Bremssattel (6) strömt.

2. Stoßstange nach Anspruch 1, dadurch gekennzeichnet, daß sie aus blasgeformtem Kunststoff besteht.

## Revendications

1. Pare-chocs avant pour un véhicule automobile possédant un radiateur (4) monté dans le capot avant, ledit pare-chocs (1) possédant une entrée (2) pour l'introduction de l'air nécessaire pour la ventilation dudit radiateur (4), de sorte que, lorsque le véhicule automobile est en mouvement, ledit radiateur (4) est refroidi par l'air qui passe exclusivement à travers ladite entrée (2) du pare-chocs, caractérisé en ce que l'air admis par l'entrée (2) pénètre dans un premier conduit (3), dans lequel il forme un flux d'air dirigé en partie vers le radiateur (4), en passant par un deuxième conduit (5), et en partie vers les garnitures (6) des freins avant, en passant par un troisième conduit (7), puis en pénétrant dans la buse (9) qui a pour effet de dévier l'air vers les freins avant (6).

2. Pare-chocs selon la revendication 1, caractérisé en ce qu'il est fait d'une matière plastique mise en forme par soufflage.

FIG. 1

FIG. 2